# EUROPEAN PATENT APPLICATION

(11) **EP 0 899 317 A1**
(43) Date of publication of application: **03.03.1999**
(21) Application number: 98306555.8
(22) Date of filing: 18.08.1998
(51) Int. Cl.: C09K 7/00, E21B 33/138

(54) **Well drilling fluid**

(30) Priority: 18.08.1997 US 914594; 11.12.1997 US 989190
(71) Applicant: Halliburton Energy Services, Inc., Duncan, Oklahoma 73536 (US)
(72) Inventor: Chatterji, Jiten, Duncan, Oklahoma 73533 (US); King, Bobby J., Oklahoma 73533 (US); Onan, David D., Duncan, Oklahoma 73533 (US); Onan, Patty L., Duncan, Oklahoma 73533 (US); Cromwell, Roger S., Walters, Oklahoma 73572 (US)
(74) Representative: Wain, Christopher Paul

(57) **Abstract**

A well drilling fluid contains a base fluid of water or oil, a viscosity increasing material and a hardenable epoxy sealant composition which becomes part of the filter cake formed on the walls of the well bore and hardens therein whereby the filter cake is consolidate into a stable solid mass.

## Description

The present invention relates to a drilling fluid.

A variety of drilling fluids have been used heretofore in drilling subterranean well bores. The most commonly used such drilling fluids are solids-containing water based viscous gels which are often weighted with particulate weighting materials such as barite. Oil based drilling fluids are also utilized and are usually inverted oil-salt water emulsions containing organophilic clays, weighting materials and other additives. When a well bore is being drilled, the drilling fluid is circulated downwardly through the drill string, through the drill bit and upwardly in the annulus between the walls of the well bore and the drill string. The drilling fluid functions to maintain hydrostatic pressure on formations penetrated by the well bore and thereby prevent blow-outs and to remove cuttings from the well bore. As the drilling fluid is circulated, a filter cake of solids from the drilling fluid forms on the walls of the well bore. The filter cake build-up is a result of initial fluid loss into the permeable formations and zones penetrated by the well bore. The filter cake and gelled or partially gelled drilling fluid mixed therewith reduce additional fluid loss as the well is drilled.

After the well bore reaches its total depth, the drilling and circulation of drilling fluid are stopped. The well is then logged and a string of pipe, e.g., casing, is run into the well bore. After the pipe is run, the well bore has heretofore been conditioned by circulating drilling fluid downwardly through the pipe and upwardly through the annulus. The conditioning has been intended to remove filter cake and gelled or partially gelled drilling fluid from the walls of the well bore. Primary cementing operations have then been performed in the well bore, i.e., the string of pipe disposed and the well bore has been cemented therein by placing a cement slurry in the annulus and allowing it to set into a hard mass therein. When the cement slurry is run down the pipe and into the annulus, the drilling fluid in the pipe and the annulus is displaced therefrom.

The purpose of cementing the above mentioned string of pipe in the well bore is to provide physical support and positioning to the pipe and seal the annulus. That is, it is intended that the set cement in the annulus will bond to the pipe and to the walls of the well bore whereby the annulus is sealed in a manner which prevents pressurized fluid migration between subterranean zones and formations penetrated by the well bore. However, the sealing of the annulus is often frustrated by filter cake and gelled drilling fluid which remain on the walls of the well bore when primary cementing operations are commenced. That is, when the cement slurry is placed in the annulus and allowed to set therein, thin layers of unconsolidated filter cake solids and gelled drilling fluid often remain between the set cement and the walls of the well bore including the faces of permeable formations or zones containing pressurized fluids. Since the inert layers of unconsolidated solids do not have the physical properties necessary to prevent pressurized fluid migration, such migration takes place by way of flow channels formed through the layers.

While a variety of techniques have heretofore been developed in attempts to remove filter cake from the walls of well bores and increase the displacement efficiencies of gelled drilling fluids therefrom prior to cementing pipe therein, continuing needs remain for improved drilling fluids, methods of drilling and methods of sealing pipe in well bores.

We have now devised a drilling fluid by which the shortcomings of the prior art are reduced or met.

According to the present invention, there is provided a drilling fluid for use in drilling a subterranean well bore, which fluid forms fluid loss reducing filter cake on the walls of the well bore, said fluid comprising a base fluid which is water or oil; a viscosity increasing material; and a hardenable epoxy sealant composition which becomes a part of said filter cake formed on the walls of said well bore and hardens therein whereby said filter cake is consolidated into a stable solid mass, said epoxy sealant composition comprising an epoxide-containing liquid and a hardening agent.

The invention further provides a drilling fluid for use in drilling a subterranean well bore, which fluid forms fluid loss reducing filter cake on the walls of the well bore, said fluid comprising a base fluid which is water or oil; a water viscosity increasing material; and a hardenable epoxy sealant composition which becomes a part of said filter cake deposited on the walls of said well bore and hardens therein whereby said filter cake is consolidated into a stable solid mass, said epoxy sealant composition comprising an epoxy resin selected from condensation products of epichlorohydrin and bisphenol A, an epoxide-containing liquid and a hardening agent.

The invention further provides a method of drilling a subterranean well bore wherein there is used a drilling fluid of the invention.

The improved drilling fluids of the present invention for use in drilling subterranean well bores are basically comprised of a water based or oil based drilling fluid containing viscosity increasing materials, weighting materials and other components including a hardenable epoxy sealant composition dispersed therein. When the drilling fluid forms filter cake on the walls of a well bore being drilled, the hardenable epoxy sealant becomes a part of the filter cake and subsequently hardens therein whereby the filter cake is consolidated into a stable solid mass.

The consolidation of the filter cake into a solid mass is highly beneficial in that it causes the filter cake to provide greater fluid loss control, to prevent or greatly reduce the occurrence of lost drilling fluid circulation and to prevent or reduce the influx of pressurized formation gas into the well bore during and after the sealing of a pipe string therein. In addition, after the well bore is drilled and a string of pipe has been run therein, the pipe can be sealed within the well bore by additional hardenable epoxy sealant composition that readily bonds to the solidified filter cake. Since the hardened epoxy sealant composition produces a very strong bond to the pipe surface as well as to the solidified walls of the well bore and the epoxy sealant composition is highly flexible and resilient, a greatly superior and longer lasting seal between the well bore and the string of pipe is obtained.

The improved methods of the present invention for drilling a subterranean well are basically comprised of the steps of preparing a water or oil based drilling fluid which forms a filter cake on the walls of the well bore as the well bore is drilled which includes a hardenable epoxy sealant composition dispersed therein which becomes a part of the filter cake formed on the walls of the well bore. When the epoxy sealant composition hardens in the filter cake, the filter cake is consolidated into a stable solid mass. When the well bore being drilled reaches total depth and a string of pipe is run into the well bore, an epoxy sealant composition is placed between the pipe and the walls of the well bore and allowed to harden therein.

In use of the drilling fluids of the invention, the epoxy sealant composition hardens in the filter cake on the walls of the well bore thereby consolidating the filter cake into a stable solid mass. The strength and other properties of the consolidated filter cake are sufficient to prevent or minimize fluid loss from the drilling fluid, lost drilling fluid circulation and the influx of pressurized formation gas into the well bore during and after sealing pipe therein.

The hardenable epoxy sealant composition dispersed in the drilling fluid is basically comprised of an epoxide containing liquid and a hardening agent. While various low viscosity epoxide containing liquids can be used, preferred such liquids are selected from the group of diglycidyl ethers of 1,4-butanediol, neopentyl glycol and cyclohexane dimethanol. A suitable epoxide containing liquid comprised of the diglycidyl ether of 1,4-butanediol is commercially available from the Shell Chemical Company of Houston, Texas under the tradename "HELOXY® 67". This epoxide containing liquid has a viscosity at 25°C in the range of from about 13 to about 18 centipoises, a molecular weight of 202 and a 1 gram equivalent of epoxide per about 120 to about 130 grams of the liquid. A suitable diglycidyl ether of neopentyl glycol is commercially available from Shell Chemical Company under the trade designation "HELOXY® 68". This epoxy containing liquid has a viscosity at 25°C in the range of from about 13 to about 18 centipoises, a molecular weight of 216 and a 1 gram equivalent of epoxide per about 130 to about 140 grams of the liquid. A suitable diglycidyl ether of cyclohexane dimethanol is commercially available from Shell Chemical Company under the trade designation "HELOXY^{®} 107". This epoxide containing liquid has a viscosity at 25°C in the range of from about 55 to about 75 centipoises, a molecular weight at 256 and a 1 gram equivalent of epoxide per about 155 to about 165 grams of the liquid.

A variety of hardening agents including, but not limited to, amines and carboxylic acid anhydrides can be utilized. The amines can be aliphatic amines, aliphatic tertiary amines, aromatic amines, cycloaliphatic amines, heterocyclic amines, amido amines, polyamides and polyethyl amines. Examples of suitable aliphatic amines are triethylenetetramine, ethylenediamine, N-cocoalkyltrimethylenediamine, isophoronediamine, N-aminoethylpiperazines, imidazoline and 1,2-diaminecyclohexane. Examples of suitable carboxylic acid anhydrides are methyltetrahydrophathalic anhydride, hexahydrophathalic anhydride, maleic anhydride, polyazelaic polyanhydride and phthalic anhydride. Of the various hardening agents which can be used, triethylenetetramine, N-cocoalkyltrimethylenediamine, isophoronediamine and diethyltoluenediamine are preferred, with isophoronediamine and diethyltoluenediamine being the most preferred. The hardening agent utilized is generally included in the epoxy sealant composition in an amount in the range of from about 15% to about 31% by weight of the epoxide containing liquid in the composition, most preferably about 25%.

In applications where a higher viscosity epoxide sealing composition can be used, i.e., a viscosity in the range of from about 90 to about 120 centipoises, an epoxide resin composition comprised of an epoxy resin, an epoxide containing liquid and a hardening agent is utilized. While various epoxy resins can be used, preferred such resins are those selected from the condensation products of epichlorohydrin and bisphenol A. A particularly suitable such resin is commercially available from the Shell Chemical Company under the trade designation "EPON® RESIN 828". This epoxy resin has a molecular weight of 340 and a 1 gram equivalent of epoxide per about 180 to about 195 grams of resin.

The epoxide containing liquid, preferably an epoxide containing liquid selected from the group of diglycidyl ethers of 1,4-butanediol, neopentyl glycol and cyclohexane dimethanol, is utilized to modify the viscosity of the epoxy resin used and add flexibility and resiliency to the resulting composition after hardening. The epoxide containing liquid is included in the epoxy resin composition in an amount in the range of from about 15% to about 40% by weight of the epoxy resin in the composition, most preferably in an amount of about 25%.

The hardening agent is preferably selected from the group of aliphatic amines and acid anhydrides set forth above, with triethylenetetramine, ethylenediamine, N-cocoalkyltrimethylenediamine, isophoronediamine and diethyltoluenediamine being preferred. The most preferred hardening agents are isophoronediamine and diethyltoluenediamine. The hardening agent is included in the epoxy resin composition in an amount in the range of from about 5% to about 45% by weight of the composition, preferably in an amount in of about 30%.

The above described epoxy sealant compositions can include fillers such as crystalline silicas, amorphous silicas, clays, calcium carbonate or barite. When used, the filler can be present in the composition in an amount up to about 150% by weight of the composition.

The improved methods of drilling a subterranean well bore of this invention are basically comprised of the steps of preparing a water or oil based drilling fluid of this invention which forms a filter cake on the walls of a well bore as the well bore is drilled which includes a hardenable epoxy sealant composition as described above. The hardenable epoxy sealant composition is dispersed in the drilling fluid and becomes a part of the filter cake formed on the walls of the well bore by the drilling fluid. Thereafter, the sealing composition hardens whereby the filter cake is consolidated into a stable solid mass which prevents or reduces fluid loss from the drilling fluid, lost drilling fluid circulation and gas migration into the well bore during or after the sealing of pipe therein.

After the well bore is drilled, a string of pipe such as casing is generally run into the well bore and sealed therein. The string of pipe is sealed in the well bore in accordance with the present invention by placing an epoxy sealant composition of the type described above in the annulus between the pipe and the walls of the well bore and allowing the epoxy sealant composition to harden therein. Because the walls of the well bore were previously consolidated by an epoxy sealant composition, the epoxy sealant composition introduced into the annulus readily bonds to the consolidated filter cake and to the string of pipe being sealed. As mentioned above, the epoxy sealant compositions utilized in accordance with this invention have very good bonding abilities and upon hardening are very resilient. As a result, the hardened annular sheath of epoxy sealant bonded in the well bore and to the pipe can withstand a variety of pipe movements brought on by expansion and the like without failure.

In order to further illustrate the drilling fluids and methods of this invention, the following examples are given.

### Example 1

A number of epoxy sealant compositions useful in accordance with this invention were prepared containing the components and in the amounts shown in the Table below. The compositions were tested for thickening times, compressive strengths, shear bond strengths and tensile strengths in accordance with the procedures set forth in API Specification For Materials And Testing For Well Cements, API Specification 10, 5th Edition, dated July 1, 1990 of the American Petroleum Institute. The results of these tests are set forth in Table I below:

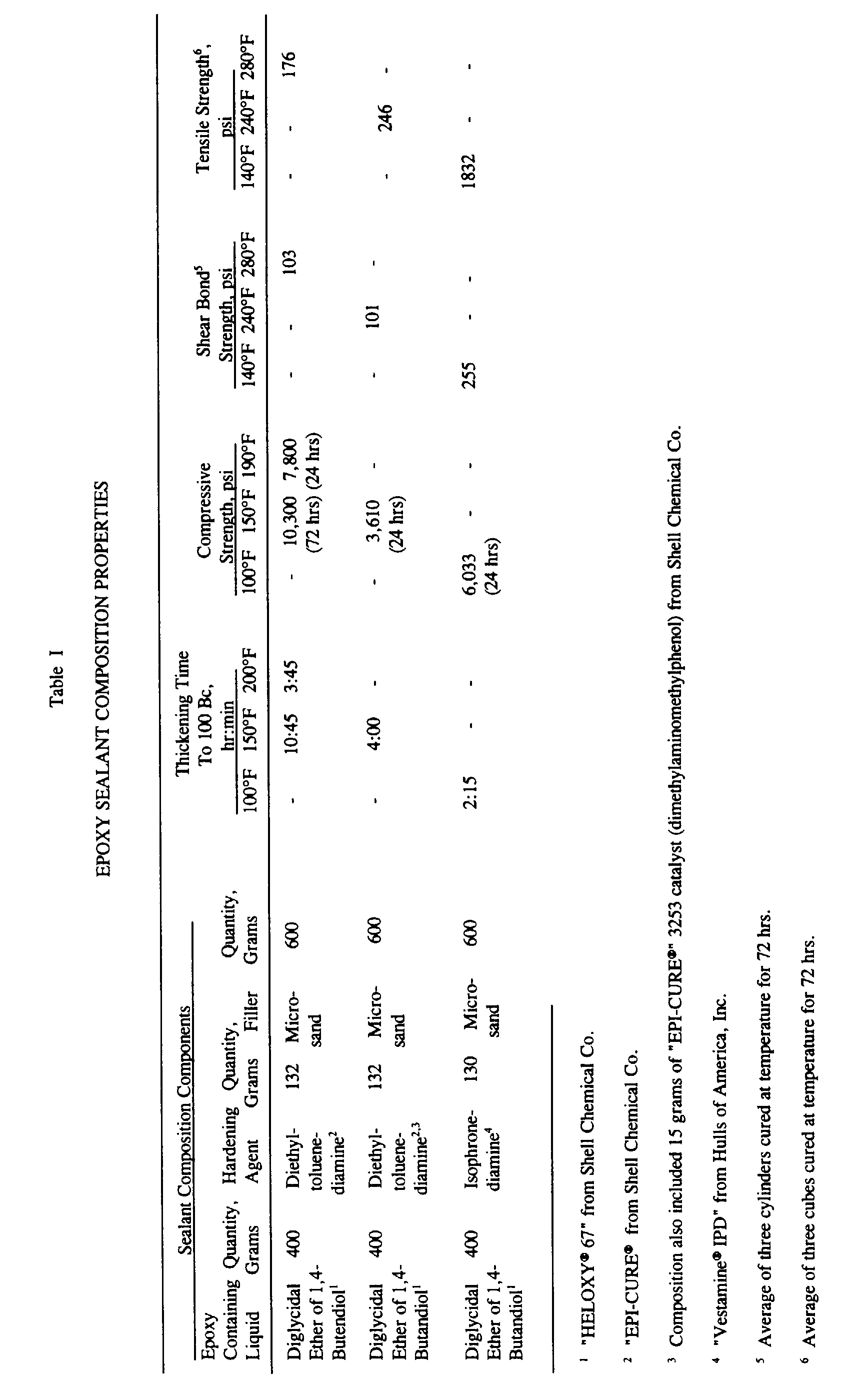

From Table I, it can be seen that the epoxy sealant compositions have excellent properties for sealing filter cake solids and pipe strings in well bores.

### Example 2

Various epoxy sealant compositions mixed with drilling fluids were prepared and tested for compressive strengths at 150°F in accordance with the above mentioned API Specification 10. The composition components and their quantities as well as the test results are shown in Table II below.

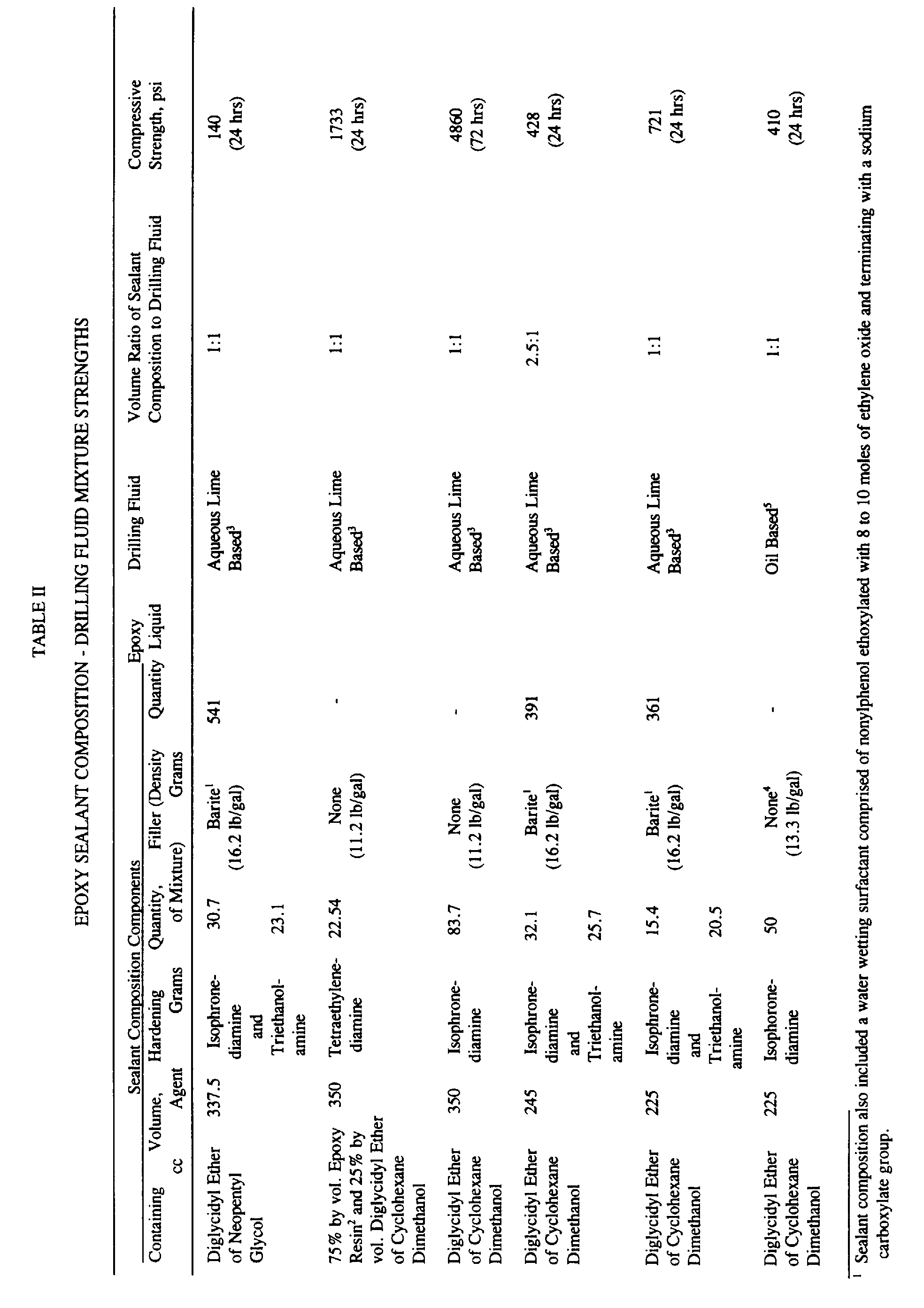

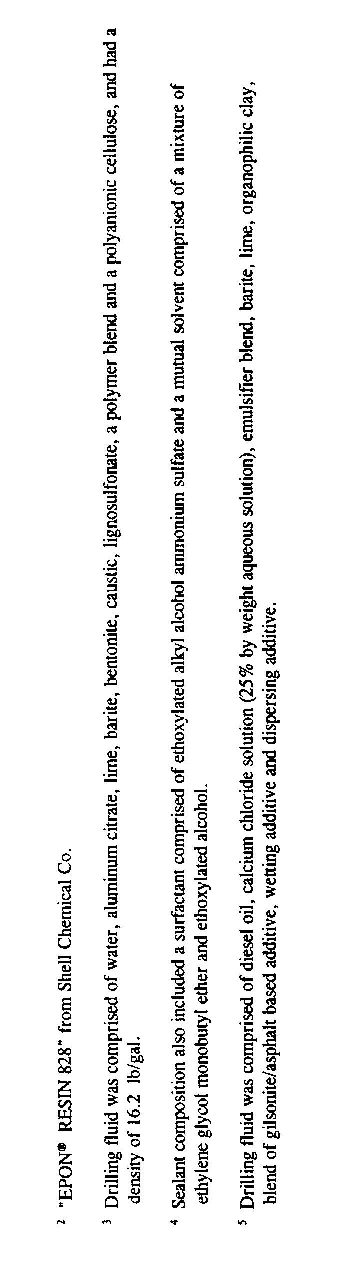

From Table II it can be seen that the tested mixtures of sealant composition and drilling fluid set into hard solid masses having good compressive strengths.

### Example 3

An epoxy sealant composition was prepared comprised of 600 grams of diglycidyl ether of cyclohexane dimethanol ("HELOXY^{®} 107" from Shell Chemical Company), 600 grams of microsand and 140 grams of diethyltoluenediamine ("EPI-CURE^{®}(R)W" from Shell Chemical Company). The epoxy sealant composition was allowed to harden in a cylinder for 24 hours at 250°F. The weight of the resulting hardened cylindrical composition was determined to be 272.36 grams. The cured composition was then submerged in crude oil in an autoclave at 250°F for 72 hours. At the end of the 72 hours, the composition was rinsed with acetone and it was again weighed. The weight was determined to be 272.68 grams. Thus, the hardened epoxy sealant composition was not dissolved or otherwise weakened by prolonged contact with hot crude oil as would be the case when the epoxy resin was used to seal filter cake solids and/or a pipe string in a well bore penetrating a deep crude oil reservoir.

## Claims

1. A drilling fluid for use in drilling a subterranean well bore, which fluid forms fluid loss reducing filter cake on the walls of the well bore, said fluid comprising a base fluid which is water or oil; a viscosity increasing material; and a hardenable epoxy sealant composition which becomes a part of said filter cake formed on the walls of said well bore and hardens therein whereby said filter cake is consolidated into a stable solid mass, said epoxy sealant composition comprising an epoxide-containing liquid and a hardening agent.

2. A drilling fluid according to claim 1, wherein said epoxide-containing liquid is selected from diglycidyl ethers of 1,4-butanediol, neopentyl glycol and cyclohexane dimethanol.

3. A drilling fluid according to claim 1 or 2, wherein the hardening agent is an aliphatic amine or anhydride.

4. A drilling fluid according to claim 1 or 2, wherein the hardening agent is triethylenetetramine, ethylenediamine, N-cocoalkyltrimethylenediamine, isophoronediamine or diethyltoluenediamine, and is present in said composition in an amount of from 15% to 31% by weight of said epoxide-containing liquid in said composition.

5. A drilling fluid for use in drilling a subterranean well bore, which fluid forms fluid loss reducing filter cake on the walls of the well bore, said fluid comprising a base fluid which is water or oil; a water viscosity increasing material; and a hardenable epoxy sealant composition which becomes a part of said filter cake deposited on the walls of said well bore and hardens therein whereby said filter cake is consolidated into a stable solid mass, said epoxy sealant composition comprising an epoxy resin selected from condensation products of epichlorohydrin and bisphenol A, an epoxide-containing liquid and a hardening agent.

6. A fluid according to claim 5, wherein said epoxide-containing liquid is selected from diglycidyl ethers of 1,4-butanediol, neopentyl glycol and cyclohexane dimethanol, and is present in said composition in an amount of from 15% to 40% by weight of said epoxy resin in said composition.

7. A fluid according to claim 5 or 6, wherein said hardening agent is selected from triethylenetetramine, ethylenediamine, N-cocoalkyl-trimethylenediamine, isophoronediamine and diethyltoluenediamine, and is present in said composition in an amount of from 5% to 45% by weight of said composition.

8. A fluid according to claim 5, 6 or 7, wherein said epoxide-containing liquid is the diglycidyl ether of cyclohexane dimethanol and is present in said composition in an amount of 25% by weight of said epoxy resin in said composition.

9. A fluid according to any of claims 1 to 8, wherein said epoxy composition further comprises a filler selected from crystalline silicas, amorphous silicas, clays, calcium carbonate and barite, preferably present in said composition in an amount of from 15% to 150% by weight of said composition.

10. A method of drilling a subterranean well bore, wherein there is used a drilling fluid as claimed in any of claims 1 to 9.

11. A method according to claim 10, which further comprises running a string of pipe in said well bore; placing an epoxy sealant composition comprised of an epoxide-containing liquid and a hardening agent between said pipe and the walls of said well bore; and allowing said epoxy sealant composition to harden therein.

12. A method according to claim 11, wherein said epoxy sealant composition further comprises an epoxy resin selected from the group of condensation products of epochlorohydrin and bisphenol A.

13. A method according to claim 12, wherein said epoxy sealant composition further comprises a filler selected from the group consisting of crystalline silicas, amorphous silicas, clays, calcium carbonate and barite.
